(19) Europäisches Patentamt
European Patent Office
Office européen des brevets

(11) **EP 3 671 321 A1**

(12) **EUROPEAN PATENT APPLICATION**

(43) Date of publication:
**24.06.2020 Bulletin 2020/26**

(51) Int Cl.:
***G02B 27/42*** *(2006.01)*

(21) Application number: **18213579.8**

(22) Date of filing: **18.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Thomson Licensing
35576 Cesson Sévigné Cédex (FR)**

(72) Inventors:
• **BORISKIN, Artem
35576 CESSON-SEVIGNE (FR)**
• **DAMGHANIAN, Mitra
35576 CESSON-SEVIGNE Cedex (FR)**

(74) Representative: **Vidon Brevets & Stratégie
16B, rue de Jouanet
BP 90333
35703 Rennes Cedex 7 (FR)**

(54) **DEVICE FOR FORMING AT LEAST ONE TILTED FOCUSED BEAM IN THE NEAR-FIELD ZONE, FROM INCIDENT ELECTROMAGNETIC WAVES, AND IMAGE SENSOR INCLUDING SUCH A DEVICE**

(57)     A device for forming a tilted focused beam (13) in a near-field zone, from an electromagnetic wave incident on the device is disclosed. The tilted focused beam (13) has a non-zero elevation angle ($\theta_0$) with respect to an arrival direction of said electromagnetic wave (12). The device comprises a layer of dielectric material (11) comprising a cavity (10), filled with a substance having a refractive index ($n_2$) lower than that of the dielectric material, and comprising at least one base surface, defined with respect to said arrival direction of said electromagnetic wave, and delineated by a base edge line, and at least one lateral surface. The focused beam (13) is formed thanks to a recombination of a plurality of nanojet beams originating from different segments of the base edge line, which approximately has a split-ring shape, with an internal edge line (101) and an external edge line (102). An angular length ($\alpha$) of the internal edge line (101) controls the non-zero elevation angle ($\theta_0$) of the focused beam (13) originating from a point (A) located on an axis of symmetry and in a focal plane of the device.

Figure 1A

**Figure 1B**

**Description**

**1. Technical field**

The present disclosure relates generally to techniques for forming field intensity patterns from electromagnetic waves, among which visible light. More particularly, but not exclusively, the present disclosure relates to techniques for near-field focusing and beam forming in the near-field zone, that can be used in a wide range of devices (as for example displays, including eyewear electronic devices and head-mounted displays for AR (Augmented Reality) and VR (Virtual Reality) glasses, optical sensors for photo/video/light field cameras, bio/chemical sensors, including lab-on-chip sensors, microscopy, spectroscopy and metrology systems, etc.).

By near-field zone, it is meant here, and throughout this document, a region around a device according to the present disclosure, whose dimensions can extend from a fraction of the wavelength to about 10 wavelengths in the host medium. It may not obviously be limited to the non-radiative (reactive) zone but can also comprise the Fresnel radiative, the transition, and partly the far-field zones, depending on the size of the device.

More specifically, the present disclosure relates to the design of the so-called nanojet (NJ) microlenses, which have been recently proposed for near-field focusing and beam-forming.

**2. Background**

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Local light confinement allows for enhanced light and matter interaction. Resolution of lens-based far-field optical systems is restricted by the Abbe's diffraction limit. Near-field (NF) focusing systems can break the diffraction limit and thus are of interest for many practical applications in the fields of material science, bio/medicine, and optical communication.

There are several approaches available for sub-wavelength NF focusing, based on evanescent waves, surface plasmons, and the nanojet (NJ) phenomenon observed for dielectric microspheres and arbitrary-shaped microcavities. The latter family of NJ focusing elements is of a particular interest as it is based on non-resonant all-dielectric microstructures.

According to the article "Photonic nanojets", by A. Heifetz et al., and published in the Journal of Computational Theory Nanoscience, vol. 6, pp. 1979-1992, 2009, the photonic nanojet (NJ) is a narrow, high-intensity, non-evanescent light beam that can propagate over a distance longer than the wavelength $\lambda$ after emerging from the shadow-side surface of an illuminated lossless dielectric microdisk or microsphere of diameter larger than $\lambda$. The nanojet's minimum beamwidth can be smaller than the classical diffraction limit, in fact as small as $\sim \lambda/3$ for microspheres. It is a non-resonant phenomenon appearing for a wide range of diameters of the microdisk or microsphere if the refractive index contrast relative to the background is less than about 2:1. The physics of the photonic NJ generated by spherical particles was rigorously studied by means of the Mie theory and eigenfunction solution of the Helmholtz equation recasted into Debye series (see for example A.V. Itagi et al., Optics of photonic nanojets, J. Opt. Soc. Am. 22, 2847-2858 (2005)). Thanks to their attractive features, photonics NJs can be used for detecting and manipulating nanoscale objects, subdiffraction-resolution nanopatterning and nanolithography, low-loss waveguiding, ultrahigh-density optical storage, and high-resolution imaging.

However, manipulation and integration of spherical microparticles is difficult. To overcome this critical issue, a new family of NJ microlenses has been proposed recently based on the edge diffraction phenomenon in patent documents EP 3 223 062 A1, EP 3 223 063 A1 and EP 3 312 660 A1.

Patent documents EP 3 223 062 A1 and EP 3 223 063 A1 illustrate the NJ beam formation phenomenon in the vicinity of a step on a dielectric surface and teach one how to generate a symmetrical on-axis NJ beam with the aid of ring-type microstructures.

Patent document EP 3 312 660 A1 teaches how to produce tilted beams with a fixed deviation angle defined by the index ratio at the step lateral surface.

The new family of NJ microlenses reported in these three patent documents enables high-resolution near-field mapping as well as simpler fabrication and integration of NJ focusing elements. However, it does not provide sufficient freedom for the control over the NJ beam deviation angle. According to the teachings of these documents, it can be controlled either by varying the refracting index of the dielectric structure or by varying the base angle of the structure. These approaches are not always feasible due to the fabrication constraints.

Thus, at present, there is no reliable solution available for accurate control over the nanojet deviation angle with respect to the arrival direction of the incident electromagnetic wave.

There is hence a need for an improved nanojet microlens, which would generate a tilted narrow focused optical beam in the near-field zone with a precise control over its deviation angle (defined with respect to the direction of propagation of the incident light).

## 3. Summary

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a device for forming at least one tilted focused beam in a near-field zone, from an electromagnetic wave incident on said device. The tilted focused beam has a non-zero elevation angle with respect to an arrival direction of the electromagnetic wave. The device comprises at least one layer of dielectric material comprising at least partially at least one cavity, filled with a substance having a refractive index lower than that of the dielectric material, and comprising at least one base surface, defined with respect to the arrival direction of the electromagnetic wave, and at least one lateral surface. The base surface is delineated by a base edge line. The focused beam is formed thanks to a recombination of a plurality of nanojet beams originating from different segments of the base edge line.

Such a device is remarkable in that the base edge line approximately has a split-ring shape, with an internal edge line and an external edge line, and in that an angular length of the internal edge line controls the non-zero elevation angle of the tilted focused beam, which originates from a point located on an axis of symmetry of the device and in a focal plane of the device.

Hence, the present disclosure provides a new type of device for forming desired field intensity distribution in the near-field zone, with the aid of purely dielectric microstructures. More precisely, such devices are remarkable in that they provide a reliable mean for the control over the NJ beam deviation angle, thanks to an appropriate adjustment of a parameter of the device's structure namely the angular length of the internal edge line of the split-ring shaped cavity.

By base edge line, it is meant here, and throughout the present document, both an actual base edge line, in case the bottom surface forms an angle with the lateral surface of the cavity, and a shadow, or imaginary, base edge line, in case there is a burr or a passing between the bottom surface and the lateral surface of the cavity, with a smooth rounded transition between both.

It must be noted that the lateral surface of the cavity need not necessarily be vertical, and may show an angle with respect to the normal to the surface of the dielectric layer.

There is no restriction on the bottom surface of the dielectric layer, which may be plane, or not. The dielectric layer may notably be flexible. The dielectric material is preferably an optically transparent material (e.g. glass, plastic, a polymer material such as PMMA (Poly(methyl methacrylate)) or PDMS (Polydimethylsiloxane)).

The substance filling the cavity may simply be air, another gas, vacuum, a liquid or any other material with a refractive index lower than that of the dielectric material, such as glass, plastic, or some kind of gel.

It must be noted that, on top of the angular length of the internal base edge line, a ratio between the refractive index of the substance filling the cavity and the refractive index of the dielectric material, as well as the base angle of the cavity, also contribute to controlling the elevation angle of the tilted focused beam.

Such a split-ring shaped cavity is easy to manufacture through established microfabrication techniques (like molding (e.g. nanoimprinting), E-beam or UV/DUV photolithography).

In one embodiment, such a NJ-based component can have a form of a plate made of an optically transparent material (e.g. glass, plastic, polymer) with a NJ microstructure created on one of its surfaces. The plate can be planar, curved, or flexible (bendable).

In another embodiment the NJ microstructure of cavities may also be formed (e.g. via lithography) directly on the surface of a silicon chip.

According to an aspect of the present disclosure, the angular length of the internal edge line is greater than or equal to 120°. Actually, the inventors have demonstrated that the position of the focal point, i.e. a point with a highest field intensity, becomes stable for an angular length of the internal base edge line $\alpha \geq 120°$. The hot spot position, i.e. the point from which the tilted focused beam originates is hence close to the focal length of the corresponding full-ring microlens.

According to an aspect of the present disclosure, the at least one cavity belongs to at least one set of at least two cavities. Notably, the cavities in the set are arranged in a horizontal plane and at a distance one from the other which is greater than one wavelength of the electromagnetic wave in the dielectric material.

Cavities may be arranged into arrays of cavities, or non-regular arrangements forming a peculiar pattern, in order to generate specific focused beams in the near zone, or an array of beams, which deviation may be controlled. Moreover, the arrays of cavities may be planar (with all base faces of all cavities lying in the same plane) or not, and can be made of identical cavities or not. Notably, the microstructure may comprise any number of cavities arranged in one plane (i.e. at a surface of a single plate) and placed far enough from each other to avoid electromagnetic coupling (i.e. at least a few wavelengths in the host medium). Thanks to this, each microcavity produces an independent nanojet beam in the near-field zone, which parameters (Full Width at Half Maximum (FWHM) and deviation angle) depend on the parameters of the corresponding microcavity and its illumination conditions. If placed closer, a more complex behavior is possible due to the electromagnetic coupling.

Hence, according to a specific embodiment of the present disclosure, the cavities in said set have different angular lengths and/or different radii of said internal edge lines and/or different orientations of said split-ring shaped base edge line on said horizontal plane.

Actually, in some embodiments, it may be preferable to arrange the NJ element in a form of an array (with a regular or irregular layout). Such an array may comprise any number of identical or non-identical elements, which may differ in terms of size (e.g. ring radius and arc length) and/or orientation (i.e. rotation of the split-ring with respect to the ring axis).

According to a further aspect, such a device further comprises at least one layer forming a substrate abutting said at least one layer of dielectric material.

Such a substrate may contribute to the mechanical rigidity of the device. It may be made of glass, plastic, a polymer material, a liquid, a gas, a gel....

According to a further aspect, such a device further comprises at least one layer forming a superstrate, said at least one layer of dielectric material being located between said substrate and said superstrate. The material of the superstrate belongs to the group comprising:

- glass;
- plastic;
- a polymer material;
- a liquid;
- a gas;
- a gel.

Hence, the device may take the form of a planar optically-transparent element, comprising two glass or plastic plates (namely the substrate and the superstrate), between which a dielectric material with void or filled hollow micro-cavities is embedded. The superstrate may of course be non-planar, and follow the shape of the substrate for example.

More generally, at least one of the substrate and superstrate must be transparent for the incident light, at least in a certain wavelength range (e.g. visible light when the device is integrated into an image sensor, as will be described in greater details below).

In that peculiar case of an image sensor application, the array of NJ microlenses can be provided (e.g. via lithography) directly on the surface of a silicon chip. In this case, transparency of the substrate is not required as light comes from above.

It must be noted that the features of the beams (orientation, deviation angle, overall shape...) will change for incline incidence of the plane wave, with a shape of the beam well preserved for the incident angles of about +/- 30°, depending on the size, base angle and curvature of the cavity base edge line.

According to a further aspect, said substrate and/or said superstrate are made of the same dielectric material as said at least one layer of dielectric material.

Hence, the device can be made of a single material or comprise several layers made of the same or different materials. The former option (single material) is typical for resist-free molding fabrication methods, whereas the latter (layered) is more likely to be used in case of E-beam and UV direct-write and lithography techniques.

According to yet a further aspect, such a device also comprises at least one optical component attached to said layer of dielectric material and/or to said substrate and/or to said superstrate. Such an optical component may be another dielectric plate acting as an optical waveguide or a plano-convex lens. In such case, the NJ microstructure may occur outside (i.e. on the external surface of the compound device) or inside (i.e. at the interface between the layers of the two attached components forming the device).

The present disclosure is also directed to a two-dimensional solid-state image pickup device comprising:

a plurality of pixel regions arranged in a two-dimensional matrix in X and Y directions,
each of the pixel regions including at least a light-receiving element, and a light guiding-element.

Such a two-dimensional solid-state image pickup device is remarkable in that said light-guiding element is the device for forming at least one tilted focused beam in a near-field zone as previously described.

Hence, the present disclosure introduces a new type of a nanojet (NJ) microlens that allows to compensate for different illumination conditions of the central and peripheral pixels in an image sensor. To this purpose, the parameters of each light-guiding element are selected with respect to its displacement from the optical axis of the image sensor.

Image sensors are widely used in a variety of consumer electronic devices such as smartphones, tablets, and digital cameras. At present, there are two types of image sensor available for mass products, namely CCD (charge coupled devices) and CMOS (complementary metal-oxide-semiconductor). Both types of sensors include an array of pixels each comprising

- a *light sensitive element* (i.e. photodiode) enabling conversion of the captured light into a readable electric signal.
- *circuitry* (e.g. in a form of metallic wires) intended readout the electric signal from each pixel,
- a *color filter* (e.g. of a Bayer type) intended to provide a desired spectral response of the pixel, and
- a *light guiding element* (e.g. in a form of refractive or diffractive microlens) intended to guide light towards the light sensitive region,

A pixel may be constructed in various known ways. Generally, a pixel is constructed of a material, which converts received light into electrical signals, which can then be processed and stored in the circuitry of the digital camera. A pixel contains a light sensitive region and one or more non-light sensitive regions. The ratio of light sensitive, or active, regions to the total area of the pixel is referred to as the fill factor. The light sensitive region may comprise a portion of a silicon wafer, which is surrounded by support circuitry, such as polysilicon gates, metal conductors, channel stops, light shields, etc., forming a pit. The light must travel down through the pit to the bottom where the light sensitive region is located.

The specific technical problem addressed by the present disclosure is associated with non-uniformity of the illumination conditions for the central and peripheral pixels in the image sensor array. The difference in the illumination conditions (i.e. in terms of the light ray incident angle) for the central and peripheral pixels may cause degradation of the image quality near the edges of the image sensor. Depending on the type of the pixel architecture and, especially, on the type of the light guiding element (LGE), the difference in illumination condition might decrease the light capture efficiency and/or increase crosstalk between the neighboring pixels.

The present disclosure provides a means for compensating for different illumination conditions and thus equilibrate the light capture efficiency of the central and peripheral pixels comprising NJ-based light condensing elements having a split-ring shape, as described above. The main advantage proposed by split-ring NJ microlenses consists in an additional degree of freedom in the control over the tilt angle and orientation of the NJ beam, that can be tuned in a certain angular range by varying the length of the arc of the split-ring cavity and rotation of the split-ring around the vertical axis. In other words, split-ring microlenses allow control over the orientation of the NJ beam in both horizontal (azimuth) and vertical (elevation) planes.

The plane in which the azimuth angle is defined is a horizontal plane comprising the base surface of the cavity, in case the electromagnetic wave is incident normal to the base surface, and the base surface forms an angle with the lateral surface of the cavity. More generally, such a plane is orthogonal to the arrival direction of the incident EM wave, and substantially tangent to the base surface, in case the transition between the base surface and the lateral surface of the cavity is not sharp but somehow rounded.

The proposed solution hence provides a flat light capturing device with controlled angle of the NJ beam, giving all the advantages of a NJ lens in the image sensor pixel plus improved angular performance. This is especially important for small pixel image sensors (even below 1 $\mu$m pixel sizes) as the refractive lenses cannot be useful in this range. More specifically, the expected advantage of the proposed solution includes an improved light capturing efficiency for pixels under oblique illumination conditions.

According to an aspect of the present disclosure, for each pixel region, the angular length of the internal edge line of the cavity of said light-guiding element (LGE) is adjusted to at least partially compensate for an incidence angle between an arrival direction of said electromagnetic wave and a normal direction to said pixel region.

According to another aspect, in each pixel region, an opening of the split-ring shaped base edge line of the cavity of said light-guiding element is oriented towards a central axis of said pixel region. Hence, according to this embodiment, the angular orientation of split-ring LGE in each pixel is selected so that the opening of the arc is oriented towards the axis of the pixel.

According to another aspect, for each pixel, the split-ring shaped base edge line of the cavity of said light-guiding element expands up to the interface with at least one neighboring pixel.

According to a further aspect, such a device comprises trenches between the light-guiding elements of neighboring pixels.

According to yet a further aspect, for each pixel region, a radius of the internal edge line of the cavity of the light-guiding element is adjusted to vary a focal length of said light-guiding element.

Hence, it is possible to design an image sensor comprising an array of split-ring microlenses having different radii of the pillar, which corresponds to the internal part of the split-ring microcavity. Such a feature of varying the radii of the internal edge lines of the different NJ microlenses in the array is used to vary the focal length of the NJ microlenses (i.e. position of the focal spot along the vertical axis), as, as will be demonstrated below in relation with the drawings, the focal length is proportional to radius. This allows to compensate for the actual position of the focal spot of the objective lens, i.e. the so-called focal arc.

It must be noted that radius and arc length of a split-ring can be varied independently, thus enabling one to adjust:

- the focal spot position along the vertical axis {vs radius}; and
- beam orientation {vs. arc}.

It is to be understood that both the foregoing general description and the following detailed description are exemplary and explanatory and are not restrictive of the invention, as claimed.

## 4. Brief description of the drawings

Embodiments of the present disclosure can be better understood with reference to the following description and drawings, given by way of example and not limiting the scope of protection, and in which:

- **Figure 1** illustrates the topology of a split-ring cavity formed in a layer of dielectric material and producing a nanojet beam when illuminated by a plane wave from below, with **figure 1(a)** showing a side view, and **figure 1(b)** a top view;
- **Figure 2** illustrates two-dimensional plots of the calculated field intensity in xz-plane for the split-ring NJ microlens of **figure 1** illuminated by a linearly-polarized plane wave $E=\{0,1,0\}$ from below;
- **Figure 3** represents the focusing characteristics of the split-ring microlens versus the angular size of the arc defined by parameter $\alpha$ for the structure of **figure 2;**
- **Fig. 4A to 4D** show two-dimensional plots of the calculated field intensity in xz-plane for the split-ring NJ microlens illuminated by a linearly-polarized plane wave $E=\{0,1,0\}$ from below for different lengths of the internal arc which correspond to the numerical labels 1 to 4 in **Fig. 3b;**
- **Fig. 5** reports the one-dimensional plots of the calculated field intensity along x and z axis, for the split-ring NJ microlens of **figure 2** illuminated by a linearly-polarized plane wave $E=\{0,1,0\}$ from below for different length of the split-ring arc (namely $\alpha=90°$, $\alpha=180°$, $\alpha=270°$ and $\alpha=360°$);
- **Fig. 6** illustrates a ray tracing diagram for a camera equipped with a set of objective lenses and an FSI image sensor under two different illumination conditions;
- **Fig. 7** illustrates the concept and an exemplary embodiment of a pixel array with LGE of a split-ring-type;
- **Fig. 8A to 8D** show several embodiments of LGE of **fig. 7;**
- **Figure 9** provides a schematic drawing for the implementation of a component according to an embodiment of the present disclosure;
- **Figure 10** illustrates the focal arc of an objective lens in an image sensor;
- **Figures A1 to A5** are prior art drawings described in Appendix and relating to the nanojet fundamentals.

The components in the figures are not necessarily to scale, emphasis instead being placed upon illustrating the principles of the invention.

## 5. Detailed description

The general principle of the present disclosure relies on the design of a new dielectric microstructure, which may be used for generating condensed low-dispersive optical beams in the near-field zone, also called nanojets, while simultaneously controlling their deviation. Its use is not limited to optical wavelengths. Presence of hollow cavities with a split-ring shape in the dielectric microstructure gives rise to a diffraction phenomenon, which is in turn coupled to refraction and interference phenomena, and allows generating condensed beam(s) of radiation in the near-field zone, with a controlled deviation, when the dielectric microstructure is illuminated by a plane wave, depending on the shape and dimensions of the structure.

The beam-forming and deviation function of such nanojet devices may be controlled by setting the angular length and the radius of the cavity's internal base edge line, as well as its orientation with respect to a vertical axis (or to the arrival direction of the electromagnetic wave illuminating the cavity).

Such a general principle allows designing new focusing and beam-forming components, which can replace the conventional focusing devices in dense optic and photonic systems, like integrated optical sensors used in photo/video cameras that are essential components in the field of mobile technology (e.g. smartphones, tablets, AR and VR glasses).

Thanks to the ultra-compact dimensions of such dielectric microstructures, as well as to the wide range and diversity of field patterns, which can be produced through the use of such microstructures, the present disclosure finds applications in many fields of technology, including, but not limited to:

- eyewear electronics, including AR and VR glasses;
- optical sensors for photo/video/light field cameras;
- light communication systems, including quantum computers;
- bio/chemical sensors, including lab-on-chip sensors;
- microscopy, spectroscopy and metrology systems;
- integrated lens antennas for applications in the millimeter/sub-millimeter/infrared (IR) wavelength ranges.

The following discussion mostly focuses on optical applications and thus refers to material properties and fabrication methods relevant to nanoscale structures and wavelength. Nevertheless, the proposed design concepts can be easily scaled to other wavelength ranges, including microwaves, mm-waves, THz, IR, visible light and UV.

Inventors of the present disclosure have reached the conclusion that diffraction of a plane electromagnetic wave on the base surface of a dielectric material in the close vicinity of an abrupt change of level of this surface, also called a step, can result in the formation of condensed optical beams (so-called nanojets), when the surface on which diffraction occurs is in contact with a substance (material or gas) having a lower refractive index than that of the dielectric material. The number of beams and shape of each individual beam can be controlled by the variation of the step size and shape of the step edge line adjacent to the lateral and lower surfaces of the step. Unlike the well-known diffracted beams predicted by the Fresnel theory, the nanojet beams are low-dispersive (they show no or small wavelength dependence). Moreover, a same nanojet focusing component according to the present disclosure can produce multiple independent beams (having identical or non-identical shape) associated with different segments of the step edge line, which is not possible with Fresnel diffractive lenses. These unique features make the nanojet-based focusing components according to the present disclosure attractive for many today and future applications.

Such features have already been described in prior art patent documents, such as EP 3 223 062 A1, EP 3 223 063 A1 and EP 3 312 660 A1. On top of these known properties, the inventors of the present disclosure have also derived interesting features, relating to the accurate control of the nanojet beam deviation angle, through the design of split-ring shaped microcavities with an adequate internal arc length.

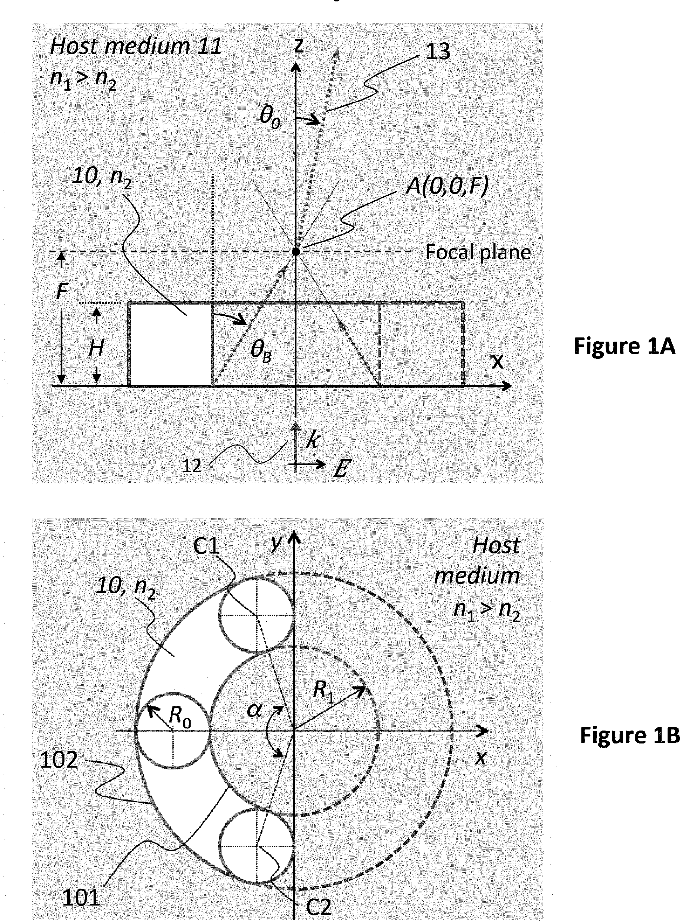

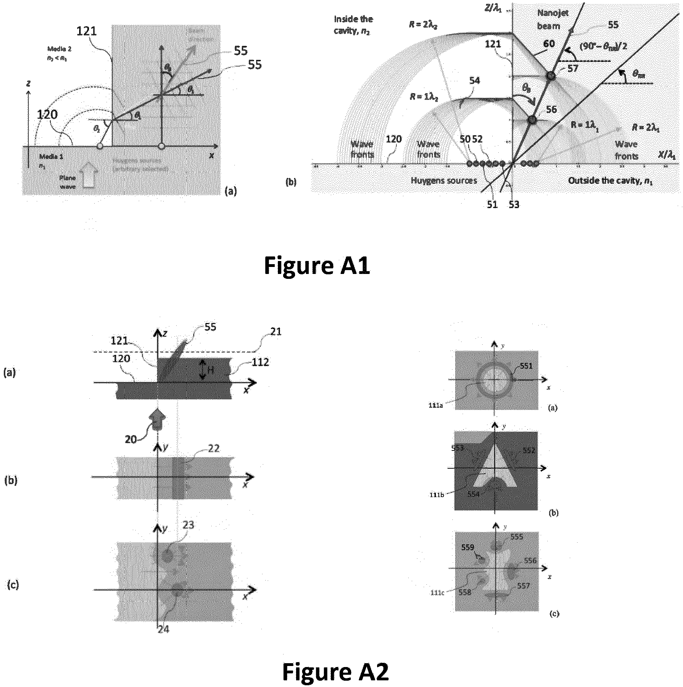

The topology of such a split-ring NJ (SRNJ) microlens is disclosed in **figure 1,** with **figure 1(a)** showing a side view, and **figure 1(b)** showing a top view.

In **figure 1,** a hollow split-ring shaped cavity 10 with height H and internal radius $R_1$ is created in a dielectric host medium 11 with refractive index $n_1$. The refractive index inside the hollow cavity 10 is $n_2 < n_1$, (for example, $n_1 = 1.5$ and $n_2 = 1$). The cavity 10 has a split-ring cross-section with internal radius $R_1$, and width $W = 2R_0$. The base edge line of the base surface of cavity 10, as illustrated in **figure 1B,** comprises an internal edge line 101 and an external edge line 102. For notations and analytical purpose only, both extremities of the split-ring are illustrated as rounded, with a radius $R_0$. This allows defining the angular length $\alpha$ of the internal arc 101 as the angle between the respective centers C1 and C2 of both rounded tips. However, it must be understood that this peculiar rounded shape is illustrated here for analytical purpose only, and that the tips of the split-ring cavity may also be straight, or have any other appropriate shape. Other ways of defining the angular length $\alpha$ of the internal arc may also be considered.

It must be noted that the width W of the cavity 10 must be at least one half of the wavelength in the host medium 11.

When a plane wave 12 is incident from below, the cavity 10 produces a nanojet beam 13, whose opening angle (i.e. light deviation angle) $\theta_0$ depends both on the index ratio between the media 10 inside and the media 11 outside the cavity and on the angular length $\alpha$ of the split-ring's internal edge line.

The dotted arrows in **figure 1A** schematically illustrate the birth of the NJ beam under a plane wave illumination from below, as a recombination of a plurality of nanojet beams originating from different segments of the base edge line of cavity 10.

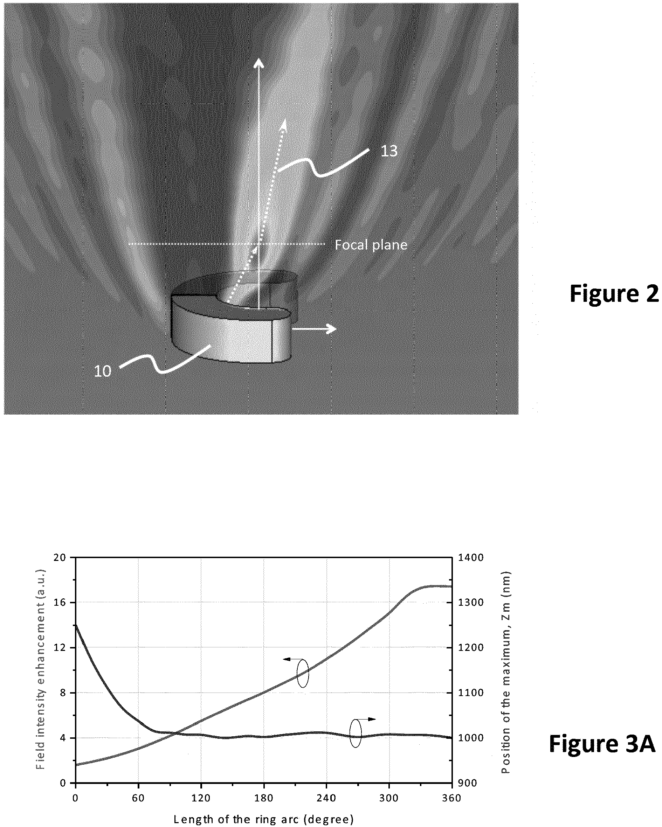

**Figure 2** illustrates two-dimensional plots of the calculated field intensity in xz-plane for the split-ring NJ microlens of **figure 1** illuminated by a linearly-polarized plane wave $E = \{0, 1, 0\}$ from below. Parameters of the structure are: $n_1 = 1.5$, $n_2 = 1$, $R_0 = 250nm$, $R_1 = 500nm$, $H = 500nm$, $\alpha = 210°$, $\lambda = 500nm$.

As demonstrated in **Fig. 2,** such a split-ring microlens can produce a tilted condensed optical beam 13 that originates from a point A and is tilted on angle $\theta_0$ with respect to the lens optical axis. Here we assume that the structure is illuminated by a plane wave 12 propagating in the positive z-direction. Point A with coordinates (0,0,F) is the focal point of a ring-type microlens with the same dimensions reported in patent document EP3 223 063 A1:

$$F \approx R_1 / \tan(\theta_B), \quad (1)$$

where $\theta_B$ is the nanojet radiation angle defined by:

$$\theta_B \approx \left(\frac{\pi}{2} - \theta_{TIR}\right)/2\,, \qquad\qquad (2)$$

where $\theta_{TIR} = sin^{-1}(n_2/n_1)$ is the critical angle for a diopter with indices $n_1$ and $n_2$ ($n_1 > n_2$). For more details - see Appendix A.

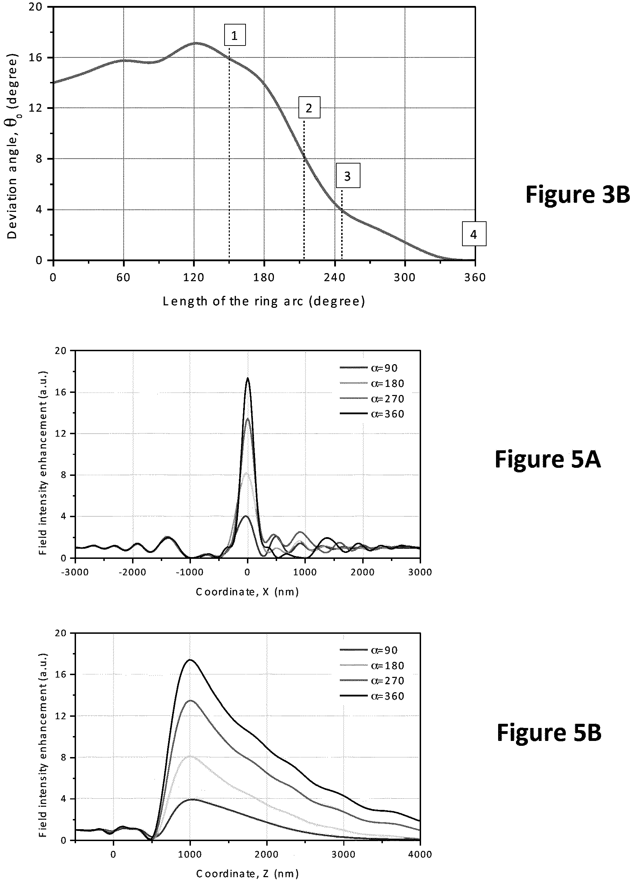

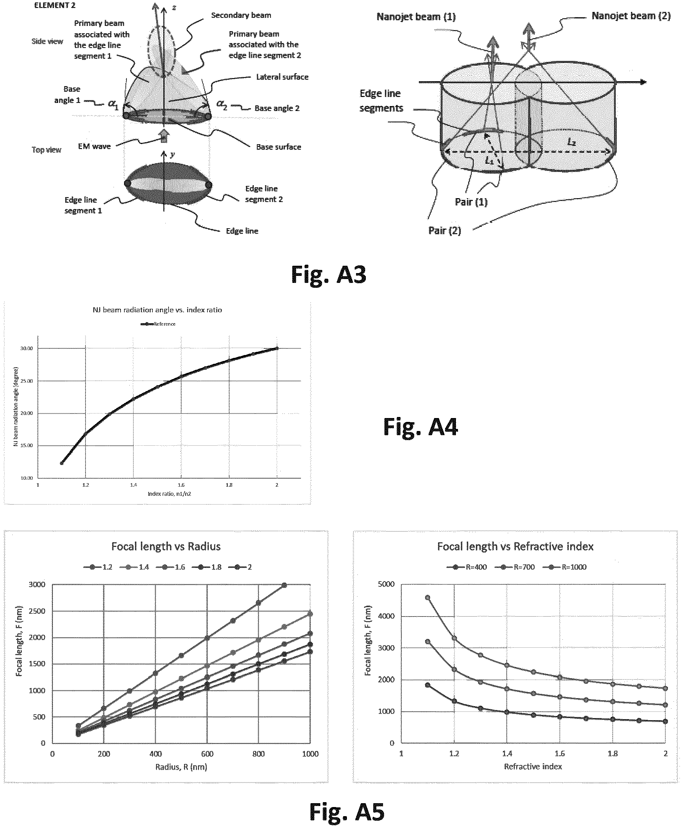

**Fig. 3** represents the focusing characteristics of the split-ring microlens versus the angular size of the arc defined by parameter $\alpha$ for the structure of **figure 2**. More precisely, **Figure 3A** shows the field intensity enhancement and position of the maximum, while **figure 3B** shows the deviation angle of the nanojet beam with respect to the split-ring axis.

As seen in **Fig. 3A** (left axis), for the exemplary embodiment, the field intensity enhancement (FIE) varies monotonically from a factor of ~2 observed for a cylindrical cavity ($\alpha$=0°) to a factor of ~18 for the full ring ($\alpha$=360°). The data are normalized by the field intensity of a plane wave in the same host medium.

As seen in **Fig. 3A** (right axis), the position of the focal point, i.e. a point with a highest field intensity (0,0,$Z_m$), becomes stable for the arc length $\alpha \geq 120°$ ($Z_m \approx 1000nm$). The hot spot position is close to the focal length of the full-ring microlens $Z_m \sim F$.

Finally, **Fig. 3B** illustrates the variation of the NJ deviation angle $\theta_0$ with respect to z-axis and the focal point position A considered as the origin (see **Fig. 1** for the definition). The numerical labels show characteristic values of the arc length parameter corresponding to different NJ deviation angles listed in **Table 1.**

**Table 1.** Relation between the arc length and NJ deviation angle

| Numerical label in Fig. 3b | Arc length, $\alpha$ (degree) | NJ deviation angle, $\theta_0$ (degree) |
|:---:|:---:|:---:|
| 1 | 150 | 16 |
| 2 | 210 | 8 |
| 3 | 250 | 4 |
| 4 | 360 | 0 |

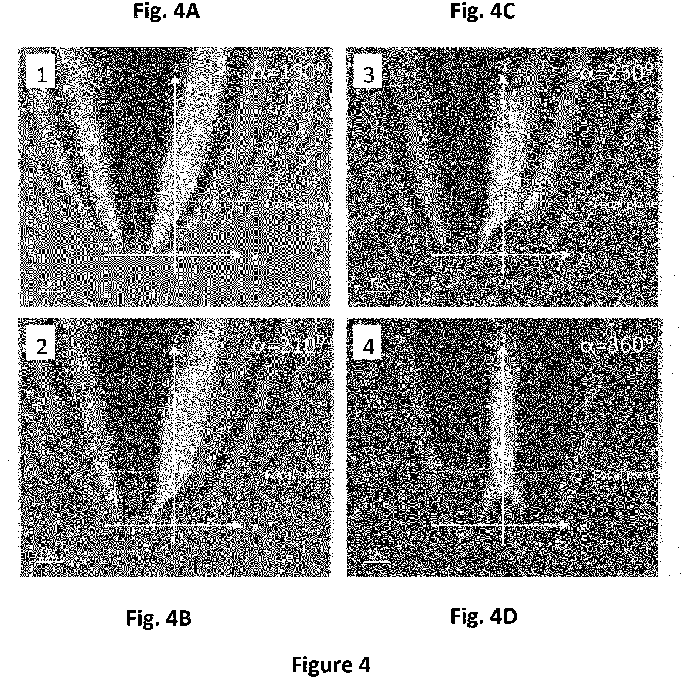

**Fig. 4A to 4D** show two-dimensional plots of the calculated field intensity in xz-plane for the split-ring NJ microlens illuminated by a linearly-polarized plane wave $E$={0,1,0} from below for different lengths of the internal arc which correspond to the numerical labels 1 to 4 in **Fig. 3b**. Parameters of the structure are the same as in **Fig. 2**.

As seen, the hot spot position remains stable for all configurations, whereas the NJ beam tilts with respect to the ring axis and the focal point position A varies in accordance with the data reported in **Table 1.**

**Fig. 5** reports the one-dimensional plots of the calculated field intensity along x and z axis, for the split-ring NJ microlens of **figure** 2 illuminated by a linearly-polarized plane wave $E$={0,1,0} from below for different length of the split-ring arc (namely $\alpha$=90°, $\alpha$=180°, $\alpha$=270° and $\alpha$=360°). On **figure 5A**, y=0, z=1000nm, while on **figure 5B**, x=y=0. Parameters of the structure are the same as in **Fig. 2**. The one-dimensional plots of **figures 5A and 5B** complement the data reported in **Fig. 3a**. The NJ beam forming phenomenon is well observed with increase of the arc length $\alpha$. The hot spot position remains stable for the entire range. The NJ beam width at half power (BWHP) in the beam cross-section and along the beam axis is about $\lambda$/2 and $3\lambda$, respectively.

As shown in **figures 1 to 5,** the split-ring microcavity 10 allows for control over the tilt angle of the NJ beam, which depends on the length $\alpha$ of the split-ring arc, i.e. the angular length of the internal base edge line of the cavity base surface. Split-rings with different arc lengths (and thus different NJ deviation angles) can be patterned on the same dielectric substrate using a single-step fabrication process. This approach is simpler than the effective index approach of the prior art and multi-material approach.

Similarly to other types of NJ microlenses, such as the ones described in prior art patent documents EP 3 223 062 A1**,** EP 3 223 063 A1 and EP 3 312 660 A1**,** the split-ring NJ microlenses can be fabricated using established microfabrication technique, such as E-beam and UV/DUV lithography or nanoimprinting.

Although **figures 1 to 5** show only one split-ring microcavity 10, it must be understood that he NJ microstructure may comprise one or more NJ beam-forming elements arranged in one horizontal plane (i.e. at a surface of a single plate). Preferably, the elements should be placed far enough from each other to avoid electromagnetic coupling (i.e. at least a few wavelengths in the host medium). Thanks to this, each microcavity 10 will produce an independent NJ beam in the near-field zone, whose parameters (beam width and deviation angle) will depend on parameters of the corresponding microcavity and its illumination conditions. If placed closer, a more complex behavior is possible due to the EM coupling.

In one embodiment, such a NJ-based component can have a form of a plate_made of an optically transparent material (e.g. glass, plastic, polymer) with a NJ microstructure created on one of its surfaces. The plate can be planar, curved, or flexible (bendable).

The plate can be made of a single material or comprise several layers made of the same or different materials. The former option (single material) is typical for resist-free molding fabrication methods, whereas the latter (layered) is more likely to be used in case of E-beam and UV direct-write and lithography techniques.

In some embodiments, the plate with a NJ microstructure can be attached to another component, e.g. another dielectric plate acting as an optical waveguide or a plano-convex lens. In such a case, the NJ microstructure may occur outside (i.e. on the external surface of the compound component) or inside (i.e. at the interface between the layers of the two attached components).

In some embodiments, it may be preferable to arrange the NJ element in a form of an array (with a regular or irregular layout). Such an array may comprise any number of identical or non-identical elements, which may differ in terms of size (e.g. ring radius and arc length) and/or orientation (i.e. rotation of the split-ring with respect to the ring axis).

Such a split-ring nanojet microlens may find useful application to compensate for different illumination conditions of the central and peripheral pixels in an image sensor.

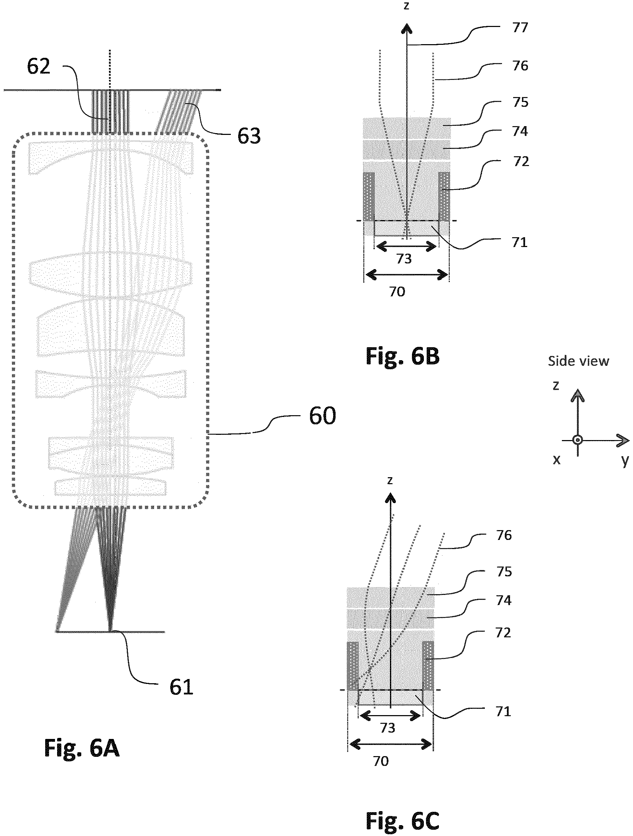

Image sensors are widely used in a variety of consumer electronic devices such as smartphones, tablets, and digital cameras. At present, there are two types of image sensor available for mass products, namely CCD (charge coupled devices) and CMOS (complementary metal-oxide-semiconductor). With reference to **figure 6,** both types of sensors include an array of pixels 70 each comprising:

- a *light sensitive element* (i.e. photodiode) enabling conversion of the captured light into a readable electric signal;
- *circuitry* 72 (e.g. in a form of metallic wires) intended to readout the electric signal from each pixel;
- a *color filter* 74 (e.g. of a Bayer type) intended to provide a desired spectral response of the pixel, and
- a *light guiding element* 75 (e.g. in a form of refractive or diffractive microlens) intended to guide light 76 towards the light sensitive region 71.

Depending on the relative position of the light collimating element and the circuitry, two types of pixels are distinguished, namely frontside illuminated (FSI) and backside illuminated (BSI). Hereafter, we mostly refer to FSI pixel architecture, however, the technical problem resolved by the present disclosure is also intrinsic for a backside illuminated (BSI) pixel. The solution proposed is also valid for both FSI and BSI pixels.

In brief, the pixel architecture may be described as follows. A pixel may be constructed in various known ways. One example is illustrated in **figure 6.** Generally, a pixel is constructed of a material, which converts received light into electrical signals, which can then be processed and stored in the circuitry of the digital camera. A pixel 70 contains a light sensitive region 71 and one or more non-light sensitive regions. The ratio of light sensitive, or active, regions to the total area of the pixel is referred to as the fill factor. The light sensitive region 71 may comprise a portion of a silicon wafer, which is surrounded by support circuitry 72, such as polysilicon gates, metal conductors, channel stops, light shields, etc., forming a pit 73. The light must travel down through the pit 73 to the bottom where the light sensitive region 71 is located.

The specific technical problem addressed by the present disclosure is associated with non-uniformity of the illumination conditions for the central and peripheral pixels in the image sensor array that is schematically illustrated in **Fig. 6.** The difference in the illumination conditions (i.e. in terms of the light ray incident angle) for the central and peripheral pixels may cause degradation of the image quality near the edges of the image sensor. Depending on the type of the pixel architecture and, especially, on the type of the light guiding element 75 (LGE), the difference in illumination condition might decrease the light capture efficiency and/or increase crosstalk between the neighboring pixels 70.

Fig. 6 illustrates a ray tracing diagram for a camera equipped with a set of objective lenses 60 and an FSI image sensor 61 under two different illumination conditions: **figure 6A** shows the two exemplary bundles of light rays captured by the objective lenses, respectively corresponding to normal illumination conditions (62) and oblique illumination conditions (63). These two exemplary bundles of light rays 62 and 63 are finally received, for the rays 62 corresponding to normal illumination conditions, by central pixels, as illustrated in **figure 6B,** and for the rays 63 corresponding to oblique illumination conditions, by peripheral pixels, as illustrated in **figure 6C.** The z-axis corresponds to the pixel axis 77.

Most of standard image sensors rely on the use of light condensing elements (LCE) in a form of either refractive or diffractive microlenses. In the former case, the difference in the illumination conditions can be partly compensated by shifting the refractive microlens towards the center of the image sensor. In the latter case, the architecture and design of the diffractive microlens is adjusted to compensate for the chief ray incidence angle with respect to the pixel position and light ray arrival direction.

Such prior art solutions provide a partial remedy for the drop of the light capture efficiency for peripheral pixels, however, these approaches may give rise to a higher optical and/or electrical cross-talk. Moreover, these established approaches have limited scalability and may not be suitable for small-size pixels. For instance, the surface area of small-size pixels used in mobile cameras may not be sufficient for redesign of diffractive lens micropattern.

Nanojet (NJ) microlenses as proposed in the present disclosure are capable of sub-wavelength focusing in the near-field zone, offering an effective solution for high-resolution image sensors with small-size pixels (with dimensions close or even smaller than one micron). Moreover, the asymmetrical structure of NJ microlenses of the present disclosure offer an interesting mean to compensate for the difference in the illumination conditions, thus solving the problem of reduced efficiency for oblique incidence.

The split-ring shaped NJ microlenses of **figures 1 to 5** can be advantageously used as light-condensing elements in image sensors, to equilibrate the light capture efficiency of the central and peripheral pixels. Actually, as previously described, the main advantage proposed by split-ring NJ microlenses consists in an additional degree of freedom in the control over the tilt angle and orientation of the NJ beam, that can be tuned in a certain angular range by varying the length of the arc of the split-ring cavity and rotation of the split-ring around the vertical axis. Such split-ring NJ microlenses thus allow control over the orientation of the NJ beam in both horizontal (azimuth) and vertical (elevation) planes.

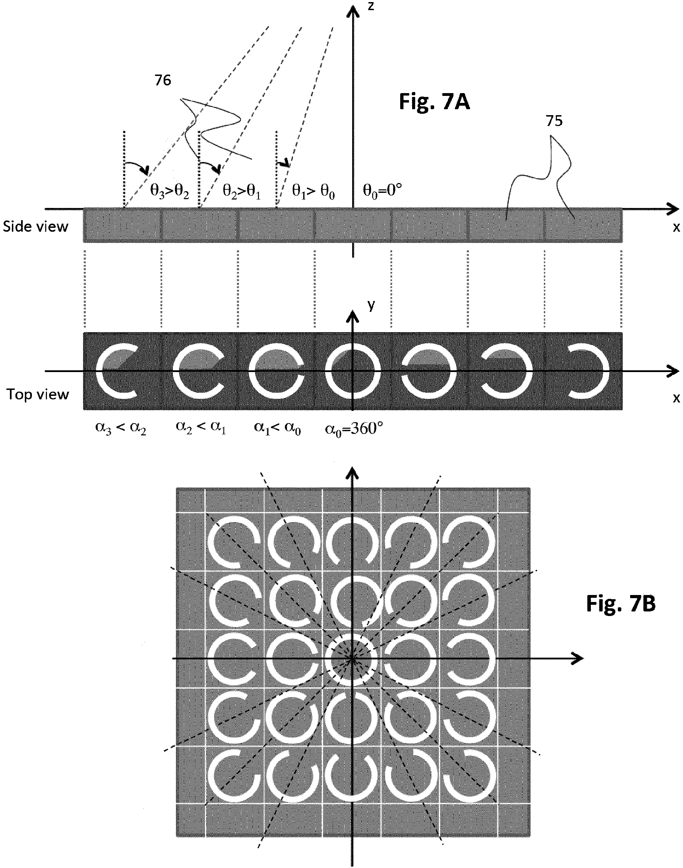

**Fig. 7** illustrates the concept and an exemplary embodiment of a pixel array with LGE 75 of a split-ring-type. Dotted lines in **Fig. 7a** indicate chief ray 76 propagation direction for different off-axis pixels. Parameter $\alpha$ is adjusted for each pixel 70 to fully or partially compensate for the chief ray incidence angle $\theta_i$.

In one embodiment, illustrated by **figure 7B,** the angular orientation of split-ring LGE 75 in each pixel 70 is selected so that the opening of the arc is oriented towards the axis 77 of the pixel 70.

In another embodiment, the plurality of pixels 70 can be divided in groups (i.e. subarrays), each group comprising identical split-ring LGEs 75 with the same angular orientation (not shown). The parameters of the LGE in each sub-array can be defined with the same method as suggested in the first embodiment, with the position of the group defined by the center of the sub-array.

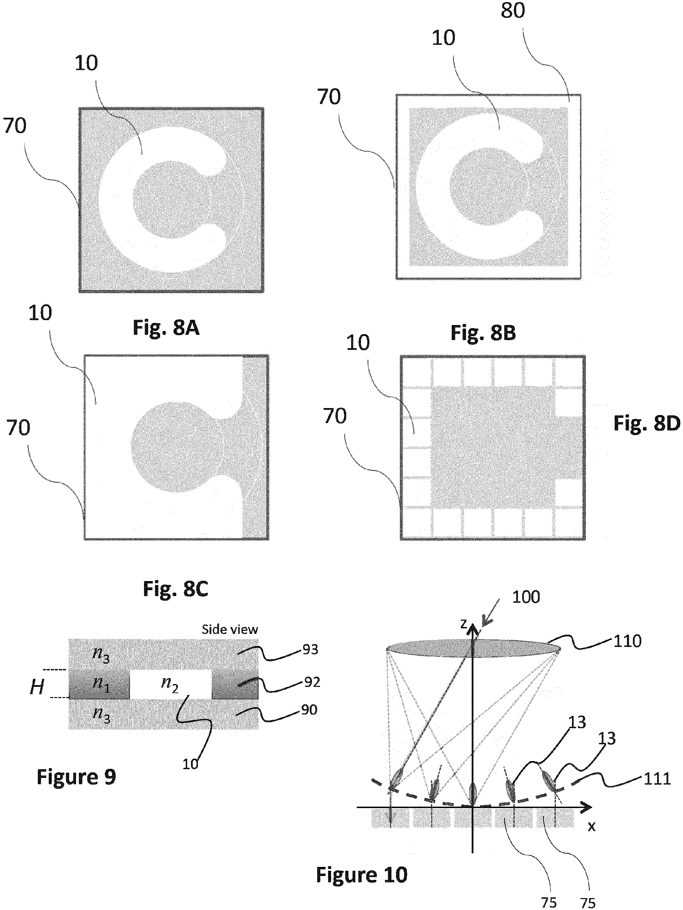

**Fig. 8A to 8D** show several embodiments of LGE 75, whose parameters can be further optimized to provide the desired optical response for a given size and position of pixels 70.

On **figure 8A,** the split-ring LGE 75 takes the form of a circular split-ring cavity 10. On **figure 8B,** the split-ring LGE 75 takes the form of a circular split-ring with a trench 80 at the interface between neighboring pixels. **Figure 8C** presents a more complex shape with a central pillar and the split-ring cavity 10 expanding up to the interface with neighboring pixels. **Figure 8D** illustrates a discretized split-ring cavity 10 created along the interface of neighboring pixels.

The proposed solution provides a flat light capturing device with controlled angle of the NJ beam, giving all the advantages of a NJ lens in the image sensor pixel plus improved angular performance. This is especially important for small pixel image sensors (even below 1 $\mu$m pixel sizes) as the refractive lenses cannot be useful in this range. More specifically, the expected advantage of the proposed solution includes an improved light capturing efficiency for pixels under oblique illumination conditions.

Actually, as illustrated in **figure 10,** split-ring microlenses allow to compensate for

- arrival direction of the scene light 100 from an objective lens 110 on periphery pixels of an image sensor and
- displacement of the objective lens focal point from the image sensor plane under oblique illumination conditions.

As shown on **figure 10,** the focal arc 111 of the objective lens 110 is not superposed to the image sensor plane. For each pixel 70, adjusting the radius $R_1$ of the internal edge line 101 of the cavity 10 of the light-guiding element 75 allows to vary the focal length (F) of the light-guiding element. As may be observed, NJ beams are generated at different distances with respect to the image sensor plane, as the focal point A from which they originate is dependent on the radius $R_1$.

**Figure 9** provides a schematic drawing for the implementation of such a component according to an embodiment of the present disclosure.

Such a device presents a multi-layer structure comprising:

- a first layer 90 forming a substrate, which may be made in glass or plastic for example;
- a second layer of dielectric material 92 abutting the substrate 90;
- a third layer forming a superstrate 93, on top of the dielectric layer 92. The superstrate may be made in glass or plastic for example. In the embodiment of **figure 9,** the same material is used for the substrate 90 and the superstrate 93, although this is not compulsory.

A split-ring shaped cavity 10 is formed in the layer of dielectric material 92.

In an embodiment, the device of **figure 9** is a planar optically-transparent (e.g. glass) plate with embedded split-ring shaped micro-cavities oriented to be orthogonal to its surface. Both the substrate 90 and the superstrate 93 are glass plates, and the layer 92 of dielectric material is a thin film made in an optically-transparent polymer like PMMA (Poly(methyl methacrylate)). In another embodiment, only one of the substrate and superstrate is optically transparent. In yet another embodiment, the device may comprise a substrate but no superstrate.

## Appendix

Prior art documents ***EP 3 223 062 A1***, ***EP 3 223 063 A1*** teach one about fundamentals of the nanojet (NJ) phenomenon and its use for the design of so-called NJ microlenses (ML).

According to patent document ***EP 3 223 062 A1***, NJ beam is associated with diffraction of a plane electromagnetic (EM) wave on an edge of a dielectric structure, such as 2D infinite groove (slot, trench) or rib or a 3D cavity or pillar patterned on a surface of a dielectric layer embedded in a host medium, such as gas, liquid or another solid dielectric material (**Fig. A1**).

The NJ beam is generated in a close vicinity of the edge as a result of the interference between the two diffracted waves originating from the two semi-infinite apertures defined with respect to the lateral wall of the step 121, which cuts the incident plane wave in two parts. The NJ beam 55 is always directed toward the medium with a higher index of refraction. Depending on the shape of the step edge line, one or more focused beams 55 and 551-559 can be created in the near-field zone (**Fig. A2**).

In case of a rib or pillar, a single high-intensity NJ beam 55 can be created as a result of recombination of multiple NJ beams originating from different segments of a step edge line, whose parameters (i.e. radiation angle, length, intensity) depend on the size and shape of the focusing elements and the ratio between the index of refraction at the step lateral surface (**Fig. A3**, which shows the NJ beam formation as a result of a plane wave diffraction on a dielectric element embedded in a dielectric host medium with a lower refractive index).

In case of a vertical step (with a base angle $\alpha=90°$), deviation angle of a NJ beam from the incident wave propagation direction is predicted by the following equation:

$$\theta_B \approx \left(\frac{\pi}{2} - \theta_{TIR}\right)/2, \quad (B1)$$

where $\theta_{TIR} = sin^{-1}(n_2/n_1)$ is the critical angle for a diopter with indices $n_1$ and $n_2$ ($n_1 > n_2$). For standard dielectric materials (with refractive index 1.2<*n*<2), the NJ deviation angle can vary in a limited range of about 17 to 30 degree (**Fig. A4**, which shows the NJ radiation angle computed using Eqn. (B1) vs. index ratio at the lateral surface of the step 121).

Knowing the NJ beam deviation angle, one can calculate the focal length of a NJ microlens and thus predict position of the hot spot, which is created as a result of interference between two or more primary NJ beams associated with different segments of the step base edge line (**Fig. A3**).

In case of a NJ microlens in a form of a cylindrical pillar with refractive index $n_1$, radius $R$ and height $H$ embedded in a host medium with refractive index $n_2 < n_1$, the focal length can be estimated as

$$F \approx R/\tan\left(\theta_B\right), \tag{B2}$$

where $\theta_B$ is NJ radiation angle defined by Eqn. (B1).

Dependence of the focal length of a cylindrical NJ microlens versus radius for selected index values and versus index of refraction for selected radius is presented in **Fig. A5**. In the analysis, lens height is fixed as $H$=500nm.

As an example, for the index ratio between the lens and host medium equal to $n_1/n_2$=1.6 (typical for glass in air) the NJ radiation angle predicted by Eqn. (B1) is $\theta_B \approx 25.7$, which corresponds to the focal length nearly equal to the radius of the cylindrical pillar ($F/R \approx 2.1$).

Note that range of applicability of Eqn. (B2) is limited to the lens with radius varying between 1 and few wavelengths that is the size of the lens for which the NJ beam-forming phenomenon is dominant. Left part of **figure A5** shows the focal length of a cylindrical NJ microlens vs. radius for a set of different index values, right part of **figure A5** shows the focal length of a cylindrical NJ microlens vs. refractive index for a set of different radii.

Summarizing the above, patent documents *EP 3 223 062 A1*, *EP 3 223 063 A1* provide the physical explanations and design guidelines for single-material NJ microlenses, which have been outlined above. This theory has been validated via full-wave EM simulations performed for various shapes and sizes of NJ microlenses as well as via a set of optical tests.

**Claims**

1. A device for forming at least one tilted focused beam (13) in a near-field zone, from an electromagnetic wave incident on said device,
   said at least one tilted focused beam (13) having a non-zero elevation angle ($\theta_0$) with respect to an arrival direction of said electromagnetic wave (12),
   said device comprising at least one layer of dielectric material (11) comprising at least partially at least one cavity (10), said at least one cavity being filled with a substance having a refractive index ($n_2$) lower than that of said dielectric material, and comprising at least one base surface, defined with respect to said arrival direction of said electromagnetic wave, and at least one lateral surface,
   said at least one base surface being delineated by a base edge line,
   said at least one focused beam (13) being formed thanks to a recombination of a plurality of nanojet beams originating from different segments of said base edge line,
   **wherein** said base edge line approximately has a split-ring shape, with an internal edge line (101) and an external edge line (102),
   and **wherein** an angular length ($\alpha$) of said internal edge line (101) controls said non-zero elevation angle ($\theta_0$) of said at least one tilted focused beam (13) originating from a point (A) located on an axis of symmetry of said device and in a focal plane of said device.

2. The device for forming at least one tilted focused beam in a near-field zone according to claim 1, **wherein** said angular length ($\alpha$) is greater than or equal to 120°.

3. The device for forming at least one tilted focused beam in a near-field zone according to any of claims 1 and 2, **wherein** said at least one cavity (10) belongs to at least one set of at least two cavities.

4. The device for forming at least one tilted focused beam in a near-field zone according to any of claims 1 to 3, **wherein** said cavities (10) in said set are arranged in a horizontal plane and at a distance one from the other which is greater than one wavelength of said electromagnetic wave in said dielectric material.

5. The device for forming at least one tilted focused beam in a near-field zone according to claim 4, **wherein** said cavities (10) in said set have different angular lengths ($\alpha$) and/or different radii ($R_1$) of said internal edge lines (101) and/or different orientations of said split-ring shaped base edge line on said horizontal plane.

6. The device for forming at least one tilted focused beam in a near-field zone according to any of claims 1 to 5, **wherein** it further comprises at least one layer forming a substrate (90) abutting said at least one layer (92) of dielectric material.

7. The device for forming at least one tilted focused beam in a near-field zone according to claim 6, **wherein** it further comprises at least one layer forming a superstrate (93), said at least one layer (92) of dielectric material being located between said substrate (90) and said superstrate (93).

8. The device for forming at least one tilted focused beam in a near-field zone according to claim 6 or 7, **wherein** said substrate (90) and/or said superstrate (93) are made of the same dielectric material as said at least one layer (92) of dielectric material.

9. The device for forming at least one tilted focused beam in a near-field zone according to any of claim 6 to 8, **wherein** at least one of said substrate (90) and/or said superstrate (93) is optically transparent at a wavelength corresponding to visible light.

10. The device for forming at least one tilted focused beam in a near-field zone according to any of claims 1 to 9, **wherein** it also comprises at least one optical component attached to said layer of dielectric material and/or to said substrate and/or to said superstrate.

11. A two-dimensional solid-state image pickup device comprising:

   a plurality of pixel regions (70) arranged in a two-dimensional matrix in X and Y directions,
   each of the pixel regions (70) including at least a light-receiving element (71), and a light guiding-element (75),

   **wherein** said light-guiding element (75) is the device for forming at least one tilted focused beam in a near-field zone according to any of claims 1 to 10.

12. The two-dimensional solid-state image pickup device of claim 11, **wherein,** for each pixel region (70), the angular length of the internal edge line (101) of the cavity (10) of said light-guiding element (75) is adjusted to at least partially compensate for an incidence angle between an arrival direction of said electromagnetic wave (12) and a normal direction (77) to said pixel region.

13. The two-dimensional solid-state image pickup device of any of claims 10 to 12, **wherein** in each pixel region, an opening of the split-ring shaped base edge line of the cavity of said light-guiding element is oriented towards a central axis (77) of said pixel region.

14. The two-dimensional solid-state image pickup device of any of claims 10 to 13, **wherein,** for each pixel, the split-ring shaped base edge line of the cavity of said light-guiding element expands up to the interface with at least one neighboring pixel (70).

15. The two-dimensional solid-state image pickup device of any of claims 10 to 13, **wherein** it comprises trenches (80) between the light-guiding elements of neighboring pixels.

16. The two-dimensional solid-state image pickup device of any of claims 10 to 15, **wherein,** for each pixel region, a radius ($R_1$) of the internal edge line (101) of the cavity (10) of said light-guiding element (75) is adjusted to vary a focal length (F) of said light-guiding element.

Figure 1A

Figure 1B

**Figure 2**

**Figure 3A**

**Figure 3B**

**Figure 5A**

**Figure 5B**

## Fig. 4A

## Fig. 4C

**Fig. 4B**

**Fig. 4D**

## Figure 4

62

63

60

61

**Fig. 6A**

z

77

76

75

74

72

71

73

70

**Fig. 6B**

Side view

z

x    y

z

76

75

74

72

71

73

70

**Fig. 6C**

**Fig. 7A**

**Fig. 7B**

10

70

**Fig. 8A**

10

80

70

**Fig. 8B**

10

70

**Fig. 8C**

10

70

**Fig. 8D**

Side view

$n_3$ — 93

$H$ $n_1$ $n_2$ — 92

$n_3$ — 90

10

**Figure 9**

100

z

110

13 13

111

x

75 75

**Figure 10**

**Figure A1**

**Figure A2**

## Fig. A3

## Fig. A4

## Fig. A5

**Europäisches Patentamt**
**European Patent Office**
**Office européen des brevets**

# EUROPEAN SEARCH REPORT

Application Number

EP 18 21 3579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 3 312 660 A1 (THOMSON LICENSING [FR]) 25 April 2018 (2018-04-25) | 1-11, 13-15 | INV. G02B27/42 |
| A | * figures 3A, 3B * | 12,16 | |
| X,D | EP 3 223 062 A1 (THOMSON LICENSING [FR]) 27 September 2017 (2017-09-27) | 1,2,4,5, 10,11, 14,15 | |
| A | * figures 3b, 29 * | 3,6-9, 12,13,16 | |
| A | EP 0 809 124 A2 (EASTMAN KODAK CO [US]) 26 November 1997 (1997-11-26) * figure 1 * | 1-16 | |
| A | US 2016/238836 A1 (OGANESIAN VAGE [US] ET AL) 18 August 2016 (2016-08-18) * figure 3E * | 1-16 | |
| A | LIU CHENG-YANG ET AL: "Geometric effect on photonic nanojet generated by dielectric microcylinders with non-cylindrical cross-sections", OPTICS COMMUNICATIONS, ELSEVIER, AMSTERDAM, NL, vol. 380, 17 June 2016 (2016-06-17), pages 287-296, XP029694296, ISSN: 0030-4018, DOI: 10.1016/J.OPTCOM.2016.06.021 * figure 4 * | 1-16 | |

**TECHNICAL FIELDS SEARCHED (IPC)**

G02B

The present search report has been drawn up for all claims

| Place of search | Date of completion of the search | Examiner |
|---|---|---|
| Munich | 16 May 2019 | Serbin, Jesper |

EPO FORM 1503 03.82 (P04C01)

## ANNEX TO THE EUROPEAN SEARCH REPORT
## ON EUROPEAN PATENT APPLICATION NO.

EP 18 21 3579

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2019

| Patent document cited in search report | | Publication date | Patent family member(s) | | Publication date |
|---|---|---|---|---|---|
| EP 3312660 | A1 | 25-04-2018 | EP | 3312660 A1 | 25-04-2018 |
| | | | WO | 2018073426 A1 | 26-04-2018 |
| EP 3223062 | A1 | 27-09-2017 | CN | 109073910 A | 21-12-2018 |
| | | | EP | 3223062 A1 | 27-09-2017 |
| | | | EP | 3433665 A1 | 30-01-2019 |
| | | | KR | 20180123504 A | 16-11-2018 |
| | | | US | 2019101700 A1 | 04-04-2019 |
| | | | WO | 2017162881 A1 | 28-09-2017 |
| EP 0809124 | A2 | 26-11-1997 | EP | 0809124 A2 | 26-11-1997 |
| | | | JP | H1054935 A | 24-02-1998 |
| | | | US | 5696371 A | 09-12-1997 |
| US 2016238836 | A1 | 18-08-2016 | CN | 106033761 A | 19-10-2016 |
| | | | JP | 6343246 B2 | 13-06-2018 |
| | | | JP | 2016149515 A | 18-08-2016 |
| | | | KR | 20160099434 A | 22-08-2016 |
| | | | TW | 201630169 A | 16-08-2016 |
| | | | US | 2016238836 A1 | 18-08-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3223063 A1
- EP 3312660 A1
- EP 3223062 A1

**Non-patent literature cited in the description**

- **A. HEIFETZ et al.** Photonic nanojets. *Journal of Computational Theory Nanoscience,* 2009, vol. 6, 1979-1992
- **A.V. ITAGI et al.** Optics of photonic nanojets. *J. Opt. Soc. Am.,* 2005, vol. 22, 2847-2858